Europäisches Patentamt

European Patent Office

Office européen des brevets

(19)

(11) **EP 0 342 752 B1**

(12) **EUROPEAN PATENT SPECIFICATION**

(45) Date of publication and mention
of the grant of the patent:
**06.08.1997 Bulletin 1997/32**

(51) Int Cl.$^6$: **G06T 11/00**

(21) Application number: **89201219.6**

(22) Date of filing: **16.05.1989**

(54) **A computer method and an aparatus for generating a display picture representing a set of object elements including a brush object element**

**Rechnerverfahren und Gerät zur Erzeugung eines Anzeigebildes, das einen Objektelementensatz mit einem Pinselobjektelement darstellt**

**Méthode de calcul et appareil pour générer un affichage d'image représentant un ensemble d'éléments-objets comprenant un élément-objet en forme de brosse**

(84) Designated Contracting States:
**DE FR GB IT SE**

(30) Priority: **20.05.1988 US 197077**

(43) Date of publication of application:
**23.11.1989 Bulletin 1989/47**

(73) Proprietor: **Philips Electronics N.V.
5621 BA Eindhoven (NL)**

(72) Inventor: **Corthout,Marc Eugeen Adriaan
NL-5656 AA Eindhoven (NL)**

(74) Representative: **Strijland, Wilfred et al
INTERNATIONAAL OCTROOIBUREAU B.V.,
Prof. Holstlaan 6
5656 AA Eindhoven (NL)**

(56) References cited:
**WO-A-84/02993          US-A- 4 631 690**

**Description**

BACKGROUND TO THE INVENTION

The invention relates to a computer method for generating a display picture representing a set of object elements including a brush object element. United States Patent 4,631,690 to the same assignee, herein incorporated by reference, discloses a multiprocessor system for forming a color picture from object elements defined in a hierarchical data structure. The present invention is not restricted to a multilevel hierarchy. The present invention may be applied to a two-color system (e.g. black and white) and to a one-processor implementation. The state of the art shows that even for a complicated pictorial situation the number of calculation steps necessary for color-assignment to a particular pixel remains limited to a low average value. For the specific case of Bezier curves and shapes the calculation generally boils down to elementary shift and add operations that straightforwardly lead to a silicon implementation of the processing. The nature of the present approach is point-driven versus the conventional object-driven approach now generally in use. The present invention envisages the use of brushes. For conceptualization thereof, a Bezier curve is defined as a primitive element that is expressed by a Bezier formula. A path is a concatenation of curves; a path may be closed or non-closed. A path may consist of a single curve. A shape is described by one or more closed paths. A certain inside versus outside definition specifies the points of the shape.

For better explanation of the description to follow, the following three frames of references are specified:

- first there are continuous or analog application coordinates in which the objects to be displayed are conceptually modelled; these will not be considered hereinafter;
- second there are discrete application coordinates, which are used for computer models of these objects and for digital calculations to generate results that are to be displayed;
- finally, discrete device coordinates specify pixels in the picture field to be displayed according to a particular color specification.

SUMMARY OF THE INVENTION

Among other things, it is an object of the invention to allow for realizing a brush superposition to a trajectory, wherein the trajectory is a path and to determine by means of elementary arithmetic operations an inside/outside predicate for any display pixel and thereby, a color. The usefulness of such superposition may be one of the following.

a. according to a first field of use, the trajectory is the guiding line of the brush motion, whereas any pixel covered by the brush at any time gets an -inside- Boolean as distinct from any pixel never covered by the brush. Here, the trajectory is a non-rational Bezier curve, and the inside of the brush is a Bezier shape. The brush has an origin or reference point that moves along the trajectory. The area to be colored need not be defined in the form of a Bezier shape. The present invention allows for easy modelling of the trajectory, for a wide variety of applicable brush shapes and yet for easy implementation.

b. according to a second field of use, the trajectory is formed by the outline of characters and the like, that may be thought of as relatively small trajectories with much tiny detail. A problem then occurs in that notwithstanding changes in magnification, such as dezooming, the characters must remain readable as long as possible. One attractive solution is using the character perimeter as a trajectory for the brush. All pixels being covered by the running brush get the same color as the rest of the character. In itself, the shape of the brush may be arbitrary. Thus, the character is dilated somewhat; in this way problems are avoided that could occur because of undersampling of narrow colored shapes during a high degree of dezooming. In this case, the trajectory must be a closed shape. If the trajectory is not a closed shape, the system of field a. prevails, that also mitigates extensive dezooming. For example, connecting lines between two blocks in a block diagram would retain connectivity. For correct solution of the dezooming problem, the dimension of the brush in digital application coordinates would be chosen so that it would correspond to be equal or nearly equal to the pixel periodicity. A particular advantage of this application is the easy implementability of elementary and locally applicable algorithms for anti-aliasing; anti-aliasing by itself is known in picture processing.

c. a third field of use is the testing of spatial coherence, that is testing a window for color uniformity. This coherence information allows for various strategic measures, such as deciding on whether an icon, subpicture or other pictorial element when placed in this window would interfere with pre-existing information. In this case a brush is used that has a shape that corresponds to the window shape, but is inverted with respect to a predetermined window reference point. The new brush travels with its reference point along any relevant color edge in the picture and it is detected whether the brush ever touches the original reference point. If so, the window color is non-uniform. The course of action described is faster to execute than the reverse, wherein all window pixels would have to be interrogated in succession with respect to all Bezier paths.

Note that in all cases part of the trajectory may extend outside the viewing window. The display may be crt, liquid crystal, hard copy or otherwise. According to one aspect of the invention, the object is realized by a computer method for pixel-wise generating a display picture representing an object set of object elements, including a brush object element that is a Bezier shape to be moved with its guiding centre along a guiding trajectory that is a non-rational Bezier path included in said object set, said method comprising the steps of:

a. for each trajectory Bezier curve providing a trajectory set of trajectory control points in an associated coordinate-wise oriented trajectory curve bounding box and for each brush Bezier curve providing a brush set of brush control points in an associated brush curve bounding box, and providing a brush bounding box containing all points of the brush shape;

b. for any pixel determining application coordinate values regarding any relevant object element for an actual point corresponding to that pixel, and then dilating each respective trajectory curve bounding box with the brush bounding box to a dilated box and

c. in a determination procedure determining for said actual point either:

c1. actual point outside dilated box then reject trajectory curve in question and go to another trajectory curve, or

c2. actual point inside brush bounding box when brush guiding centre positioned in either end point of actual trajectory curve, then execute brush procedure with respect to such end point, but

c3. otherwise execute a division procedure on the trajectory Bezier curve in question and take any part as secondary trajectory Bezier curve for processing in said determination procedure;

d. in the brush procedure for any brush Bezier curve determining for said actual point either:

d1. actual point outside brush curve bounding box, then go to intersection procedure, or

d2. actual point coincides with any brush Bezier curve end point, then exit to assignment operation, or

d3. all control points of brush Bezier curve lie in a 2x2 discrete point square, then goto intersection procedure, but

d4. otherwise execute division procedure on brush Bezier curve in question and take any part as secondary brush Bezier curve for processing in said brush procedure;

e. in said intersection procedure determine a number of intersections of a particular semi-infinite line starting in said actual point with an actual brush Bezier curve and accumulating said number, until all brush Bezier curves have been processed in the brush procedure and then in case of an odd accumulation result going to said assignment operation but otherwise return to said determination procedure while resetting the accumulation;

f. in said assignment procedure assigning an -inside- indication to the pixel in question, and exit;

g. but otherwise assigning an -outside- indication to the pixel in question, and exit.

The invention also relates to an apparatus for generating a display picture representing a set of object elements including a brush object element. The processing can well be effected in a (large-scale) integrated circuit processor. Various advantageous aspects are recited in the dependent Claims.

SELECTED ADVANTAGES TO THE INVENTION

The invention allows a particularly fast and versatile implementation of point-driven coloring of brushes in a display field, wherein the brushes may have many different shapes and find wide applicability, such as in a dezooming situation. Moreover, Bezier curves, paths and shapes of various complexity may be used. Such advantages could be of use in the display of block diagrams, schematics of many sorts, technical drawings, animated movies, text processors, and many others. In particular, the processing operations are of simple form so that they could be done either on general circuitry that is inexpensive, or on special circuits that are optimized for speed. Notably, the data structure may be of any level of complexity and there is little requirement for operator skill.

BRIEF DESCRIPTION OF THE FIGURES

The invention will be explained hereinafter with respect to the following Figures, wherein

Figures 1a-1d give various forms of trajectories and brushes;

Figures 2a-2c give applications of the invention.
Figures 3a-3f illustrate various operations with respect to Bezier curves;
Figures 4a-4c give architectures for executing the operations according to the invention;
Figures 5a-5c illustrate operations with respect to rational Bezier curves;
Figures 6a-6c illustrate various acceleration mechanisms for the process.

PHILOSOPHY OF THE INVENTION

The referenced patent gives ample detail on non-rational Bezier curves of first degree (straight lines) and arbitrary higher degree. Each Bezier curve is completely defined by a limited number of so-called control points, of which the first and last ones coincide with the terminating points of the curve. An analytic expression of the curve is formed by a Bezier polynomial. A Bezier curve of degree j has j+1 control points. In first instance, only non-rational Bezier curves are considered.

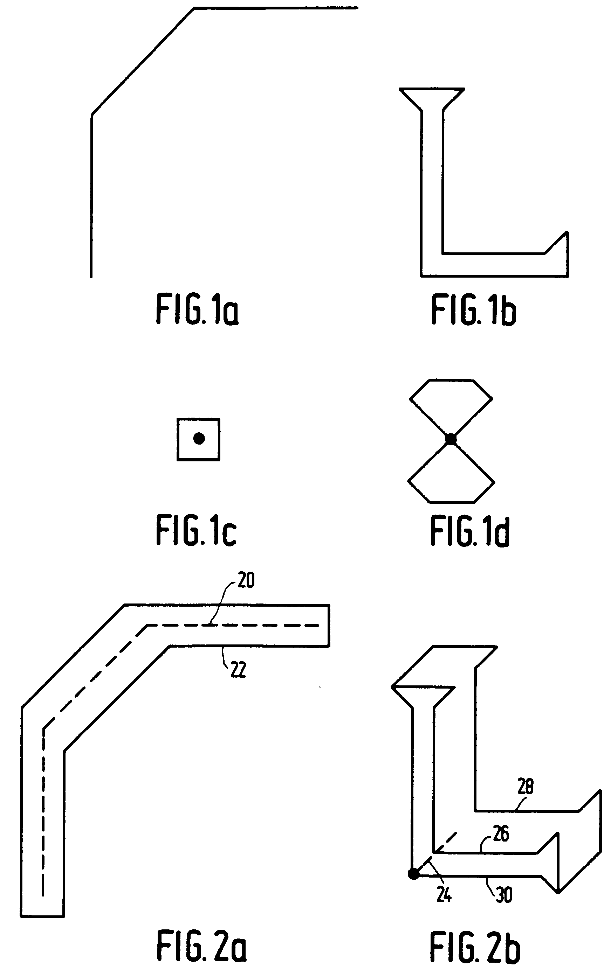

Figure 1 gives various shapes of trajectories and brushes that each are formed from Bezier curves of first degree, that is straight line segments. For brevity, higher degree Bezier curves are not discussed. Figure 1a gives a trajectory consisting of three contiguous straight lines; this trajectory is not a closed figure and by itself would not define an inside region or shape. Figure 1b gives a trajectory in the form of a seriphed capital L; this trajectory is a closed figure and defines an inside region or shape versus an outside region. In case the inside information is to be displayed differently from the outside region, the relevant assignment is on a pixel by pixel basis. This is no problem when the width of the bars in device coordinates is, for example three pixels or more. In case the width is less, certain noise could occur that would give rise to irregular edges which would decrease legibility. A standard solution is to give normalized shapes for each respective letter size and orientation in the form of bit maps. However, this does not allow for various elementary graphic operations such as rotating, mirroring and non-integer magnification. The problems get even more serious if the widths of the strokes go down to one pixel or less. In certain situations, the strokes may get interrupted due to undersampling. The present solution is to dilate the inside region by means of a so-called brush. Figure 1c shows an elementary brush object element that is shaped as a square. It has a guiding centre shown as a dot. The guiding centre is now moved along the trajectory. If the brush is sufficiently large, the above problems of edge noise and undersampling will be mitigated: the shape is dilated by the brush area. Dezooming is now effected in that the trajectory gets a variable magnification factor, for example by variation of the point sampling rate in the description of the trajectory. On the other hand, the brush in application coordinates is chosen so that when mapped on device coordinates its dimension would correspond to 1x1 pixel. However, various other dimensions would do as well; it is not necessary that the dimensions should correspond to an integer number. After coloring, post-processing by a filter may still further improve character shapes. Preferably, the brush dimensions in device coordinates are kept fixed under any zooming/dezooming operation.

A similar effect is reached when the zero-width trajectory of Figure 1a is dilated by the brush area. This may be done, for example in displaying a block diagram, wherein connectedness in connecting lines between the various blocks must be retained under any degree of dezooming. In this case the connecting lines will never be interrupted. Of course, in other cases the brush would not be used, while also selected brush use may be effected, wherein certain trajectories get the brush treatment, whereas others do not get such.

The first degree Bezier curves are straight line segments that are described by two control points located in the ends of the segments: contiguous segments have one control point in common. The phenomena with higher order non-rational Bezier curves are corresponding: the only difference is the necessity for additional control points. Trajectories and brushes may be of various complicated shape. The guiding centre of the brush need not be its centre of gravity; in fact, it may even lie outside the brush shape proper. Brushes need not be symmetric. For reason of example, Figure 1d gives a brush in the form of a figure eight. The brush shape always must be a closed path. The guiding centre usually is part of the inside region of the brush. The use of the brush feature may be different in that not the noise or undersampling would be the problems, but in that the object were embellishment of certain shapes. In that case often various asymmetric brush shapes could find application.

Now, the referenced patent uses the even/odd filling convention. If, starting from a particular point, a semi-infinite line intersects the closed path an odd number of times, the point is inside the closed path. Otherwise it is outside. Another convention is the non-zero winding number filling convention: if the vector from the point in question to a point that runs along a full cycle of the closed path winds over a non-zero multiple of 360°, the point in question is inside the closed path. In case of zero winding number the point in question is outside. For certain shapes, the two conventions may give different results. They may also be used in mixed fashion.

APPLICATION OF THE INVENTION

Figure 2a-2c give various applications of the invention. Figure 2a gives the result of the first application of the invention i.e., the combination of the trajectory according to Figure 1a and the brush shape of Figure 1c. Herein, the trajectory 20 is shown as a dashed line, whereas the perimeter 22 is given as uninterrupted line.

Figure 2b gives another result of the first use of the invention. Here, a relatively short trajectory is used as indicated by dashed line 24. The brush now has the shape of the letter L in Figure 1b. The guiding centre has been indicated in the lower left hand corner by a dot. In an initial position the brush shape is shown by perimeter lines 26, 30. The total area covered by the moving brush is indicated by perimeter lines 28, 30. In this way a shadow-like effect can be given to a character or other shape. Countermeasures against undersampling and the like give similar shapes as shown in Figures 2a, 2b.

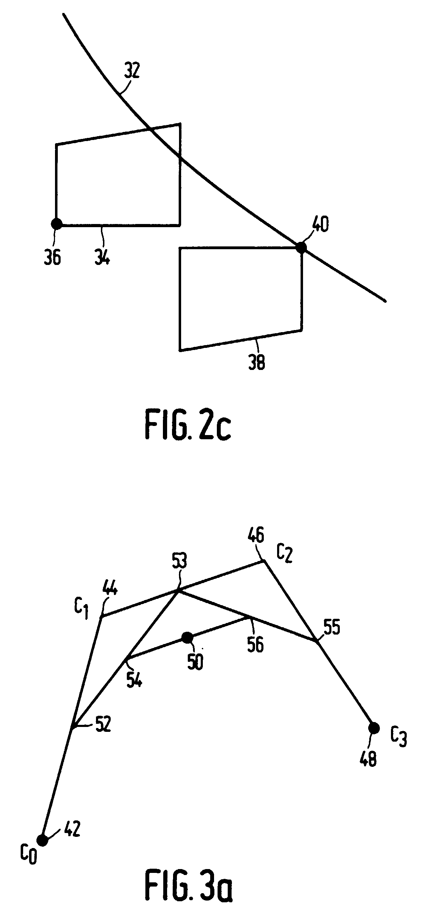

Figure 2c gives an example of a test for coherence within window 34, which has the form of a closed Bezier path, with reference point 36. The only relevant edge between two different colors is Bezier curve 32. In practice, such edges would be closed paths; otherwise the colored region would be of indeterminate magnitude. The operation goes as follows: let the reference point 40 of a brush 38 that is congruent with window 34, but inverted in both coordinate directions run along the curve 32. Test whether point 36 is ever covered by the brush shape 38. If it is, no coherence exists, and all pixels of window 34 must be colored accordingly after a separate determination of their positions with respect to curve 32. If point 36 is never covered by the inverted brush, coherence exists, and color determination for a single pixel will yield the color for all other pixels within window 34. The above applies for all positions of reference point 36 with respect to window 34.

## DESCRIPTION OF THE PROCESS ACCORDING TO THE INVENTION

The steps to be taken for coloring a pixel in general have largely been described in the referenced patent and are only briefly summarized hereinafter. The object elements are given in a data structure of one or more hierarchical levels that at a lowest level of any hierarchical branch only has Bezier object elements. Now, first the pixel position is translated to a discrete point in application coordinates. Next, the relevance or irrelevance of the data structure for this point is determined. If irrelevant, the process stops. If relevant, the next lower level object elements of the data structure are accessed, each as topmost level of a partial data structure. This determination of relevance goes down until either irrelevance is found, or until at a lowest level a Bezier object element is encountered. Next the colors must be determined on the basis of an inside/outside information. To this effect, first for any Bezier curve the procedure takes a bounding box which encloses all actual points of the curve in question. Often this bounding box is determined by the two end points of the curve. Otherwise, the bounding box may be the smallest coordinate-wise oriented box containing all control points of the curve. Any larger bounding box would also do. If the point in question is outside the bounding box, the color determination may begin. If the point in question is inside the bounding box, the Bezier curve is divided into two parts, each of which has a new bounding box assigned. Usually, this iteration has only a few steps. If the bounding box becomes at most equal to a box of 2x2 points, the process also stops. The operation is repeated for all curves of a Bezier shape. After this process, a semi-infinite, e.g. horizontal, line is drawn through the point in question and the number of intersections through the Bezier shape is counted. The processing of the 2x2 bounding box and the counting of the number of intersections has been considered extensively in the referenced patent. So, if the number is even the point in question is -outside-, if the number is odd, the point in question is -inside-. The so-called non-zero winding number filling convention however can be supported equally simple by counting edge crossings in a signed way dependent on the direction (alongside the closed path) wherein they cross the horizontal line and checking the zeroness of the resulting count at completion time.

Figures 3a-3d give various operations with respect to determination of Bezier curve pixels. Figure 3a gives the well-known subdivision theorem for a continuous Bezier curve of third degree. The Bezier polynomial is:

$$\underline{P}(u) = \sum_{i=0}^{n} \binom{n}{i} u^i (1-u)^{n-i} \cdot \underline{P}_i,$$

wherein n is the degree of the curve, and $\underline{P}_i$ are the describing vectors of the respective control points. Thus:

$$\underline{P}(u) = \underline{P}_0(1-u)^3 + 3\underline{P}_1 u(1-u)^2 + 3\underline{P}_2 u^2(1-u) + \underline{P}_3 u^3,$$

wherein u is the parameter. Points 42-48 are the control points of the complete curve. Points 52, 53, 55 are the mid-points of the segments interconnecting the original control points. Points 54, 56 are the mid-points of the line segments interconnecting the points 52, 53, 55. Point 50 is the mid-point of the segment interconnecting points 54, 56. Point 50 constitutes a control point and end point of two partial Bezier curves that together constitute the original Bezier curve.

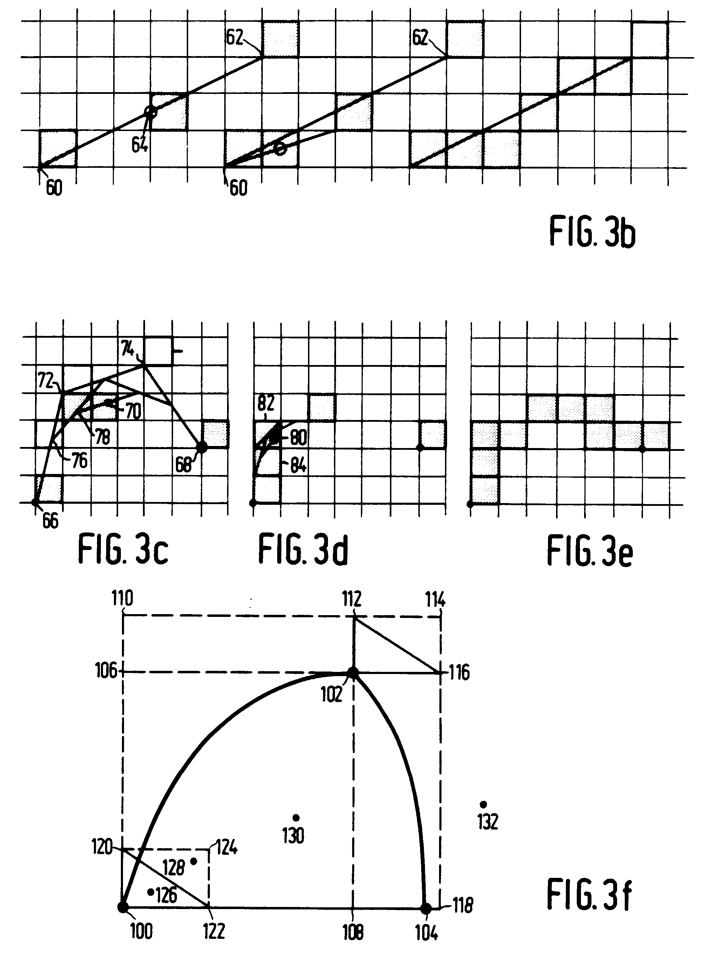

The other control points of these two parts are 42 (end point), 52, 54, and 56, 58, 48 (end point), respectively. By successive division steps the whole Bezier curve can be found, see also the referenced patent, Figures 1b-1e. For determining the position of a point corresponding to a Bezier curve defined on the discrete grid of the application coordinates, reference is had to present Figures 3b-3d. For a first degree curve this is shown in Figure 3b. The control points are 60, 62, both with their associated pixels (grey squares). If the curve is halved (center of circle 64), the associated grid point on the discrete grid is again shown as a grey square. Here, "associated" means that the grid point represents the area if the mid-point is either within or on the left edge or lower edge of the area. Thus, through truncating, the quasi mid-point is the lower left hand edge of the square in question. In the Figure a new circle gives the midpoint of the half-curve at left, and the associated discrete point in grey. As a final step, the determination of the midpoints and associated application space grid points is carried through to the end. If the control points lie within a 2x2 point square, the division process is terminated.

Figure 3c shows the same kind of procedure for a non-monotonic Bezier curve of third degree. Now, the curve may extend outside a rectangular box that contains the first and last control points. It may be proven that the curve may not extend outside a rectilinear box that contains all control points. The left hand version gives control points 66, 72, 74, 68 and associated pixel areas. Furthermore, successive divisions give control points 66, 76, 78, 70 of the left hand half-curve which are indicated grey. By truncation the new control points come in the lower left hand corners of these point areas.

The next version of Figure 3d gives the calculation of second stage midpoint 80 that is translated to grey point 82. The additional new control points both are in grey point 84, so their truncated control points coincide. The last Figure 3e shows in grey all points on the discrete application coordinate grid generated for the Bezier curve in question.

Figure 3f illustrates the guiding of a brush shape along a trajectory. The trajectory contains three curves 100-102; 102-104; 104-100, that for reasons of simplicity has been chosen as monotonic. The control points other than end points have not been shown. The brush has the shape of an unsymmetric triangle with an angle of 90°. The brush has been shown in the positions: 100-120-122 and 102-112-116, with its guiding centre coinciding with the end points of Bezier curve 100-102. For the present, only this curve is considered. Because of monotonicity, the bounding box as shown, given by end points 100-102 contains all control points of curve 100-102. If necessary, a larger bounding box may be used as mentioned earlier. This bounding box is dilated with the bounding box of the brush shape, to yield a composite bounding box given as 100-110-114-118. The edge lengths of the dilated box are given by the sums of the edge lengths of the trajectory bounding box and of the brush bounding box. The summing is done as shown: the moving brush bounding box will remain within the dilated bounding box. The following cases now exist for the position of the point in question, wherein the situation for -brush only to be colored- and -brush plus trajectory shape to be colored- are treated side by side:

-A. point in question not in dilated bounding box: 132. This means that the color of the pixel corresponding to this point can now be determined inasfar as only the motion of the brush along curve 100-102 is concerned. If only the brush is considered for a different color, this pixel gets the -outside- color. If the closed path 100-102-104 as dilated by the brush is to get the -inside- indication, the number of intersections of a semi-infinite line through point 132 with the closed path must be calculated. The contribution for curve 100-102 is obviously zero to one. Next, a similar calculation as for curve 100-102 must be made for the other curves, inclusive of all operations that are discussed hereinafter with respect to curve 100-102. At the end, contributions by the other curves to the number of intersections would give a final result. If for all curves that constitute the closed path the point is outside the dilated bounding box, the number of intersections for this curve in the "even/odd filling convention" would either be zero or two, and the point in question would get an -outside- indication. If, in this case, the trajectory itself does not govern a color, only the brush is considered for the -inside- information determination. In the case of Figure 2a the -inside- information then controls a color. In the case of Figure 2c the -inside- information then indicates a non-coherent result which necessitates color determination for all pixels separately (or alternatively), to divide the regions of the respective pixels and redo the processing for the subregions.

-B. point in question is inside the dilated bounding box but not in brush bounding box when brush positioned with guiding centre in either end point (130). Color undecided and go to next dividing step. In this step the Bezier curve is divided as explained earlier and the process is repeated wherein each half of the curve is considered to be a separate curve. Again the bounding boxes of the parts are dilated with the brush bounding box.

-C. point in question inside brush bounding box when brush reference point coincides with either end point as, e. g. in points 126, 128. Now, if only the brush is to be colored, the problem restricts to deciding whether the point in question is within the brush shape itself. This determination is done in the same way as in the referenced patent; the relevant curves now are the edges of the brush shape. If the point is inside the brush shape (e.g. 126) the associated pixel gets the brush color. If it is outside the brush shape (128), it is treated in the same way as point 130: the Bezier curve 100-102 is divided according to the algorithm described and the points are treated again for the smaller, dilated composite bounding box, and for the brush bounding box, respectively. This applies to both parts of the curve. The processing as point 132 is done if outside both composite bounding boxes. The processing as point 130 is done if within at least one composite bounding box. The processing as point 126, 128 is done if within at least one brush bounding box. With respect to curve 100-102 there are no other cases than the possibilities 126, 128, 130, 132 treated herebefore.

For each part of curve 100-102 the division processing is continued until either:

- the point is outside the dilated bounding box;
- the point is inside the brush when positioned on one of the end points;
- in that case, the point's pixel gets the -inside- color;
- all control points of the curve part are inside a 2x2 point square; in that case the processing again is elemental as described in the reference patent; in many cases this last possibility will not justify separate treatment because of the size of the brush being big enough for the case of point 130 not to occur.

It has been found that usually, the number of process steps to reach any of these decisions is quite small. Further, the process is effected in exactly the same way when a curve has control points not in the bounding box given by the end points. The only difference is that the bounding box is enlarged to encompass all control points. This applies both for the trajectory and for the brush.

The above-described process can often be simplified. If the brush is a rectangle, the case of point 128 does not exist. The occurrence of the point 126 case then directly leads to the -inside- coloring and the process can be terminated.

DESCRIPTION OF A HARDWARE IMPLEMENTATION

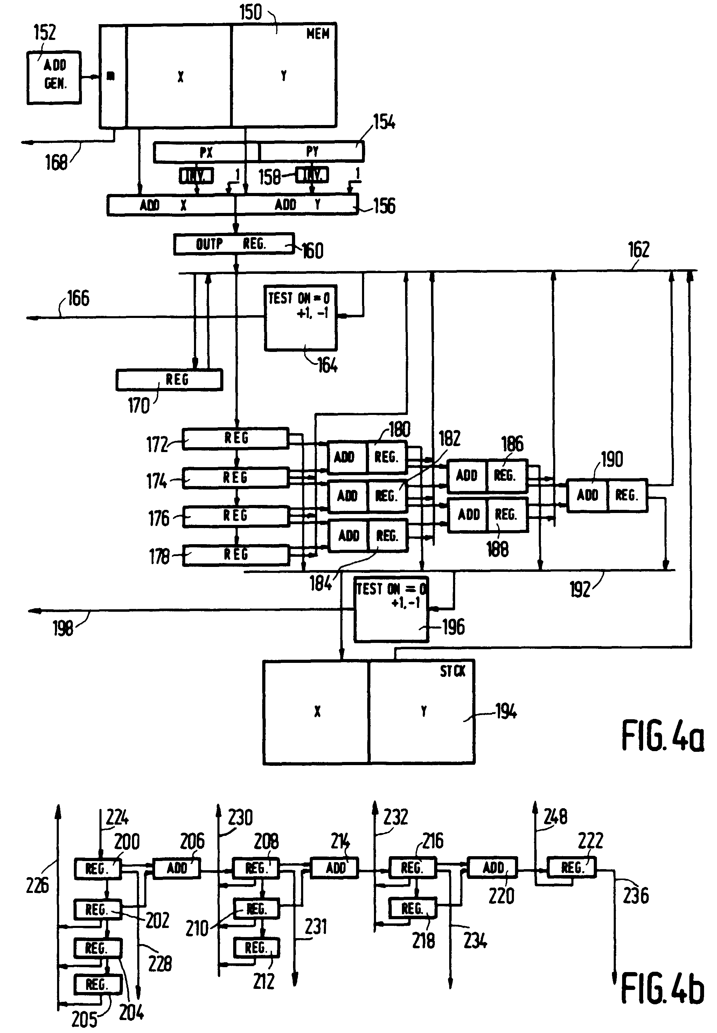

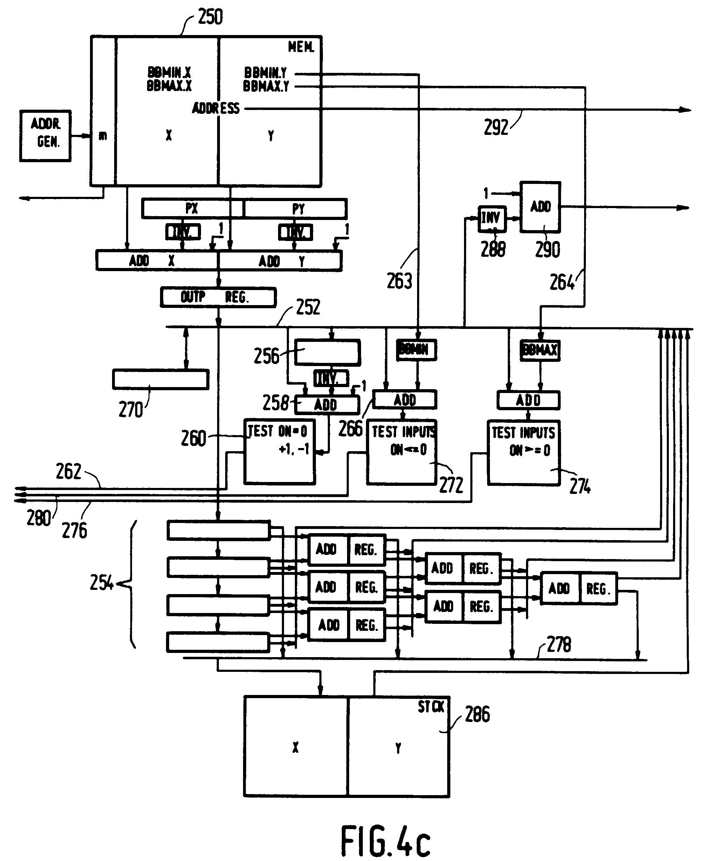

Figure 4a shows an elementary processor architecture for calculating the inside-outside indication. For simplicity a unitary limiting shape is considered, this means that either the trajectory shape with zero brush dimension is considered, or the set-up is used for the brush shape only. The case of a composite limiting figure, wherein both trajectory and finite brush dimension must be considered, is described with respect to Figure 4c. Now, the coordinates of the control points of the Bezier curves of the trajectory are stored in memory 150, having an address generator 152. For each entry the x and y values are stored and also an indication m that gives the degree of the curve. x and y are defined in application coordinates. For brevity, the loading mechanism and the reset for address generator 152 have not been shown. Element 156 is an adder that for explicitness has been shown separately for x and y values, respectively. In practice, a single adder may be used in multiplex operation. For the remainder of the set-up, this doubling is not shown. Adder 156 receives the contents of store 150 and furthermore, the contents of register 154 that contain the coordinates of the point corresponding to the pixel that must be colored, after inversion by elements 158. Furthermore, a single 1 is fed to the lowest significant bit position but one. In this way, the two's complement representation of the actual point's coordinates is produced and a correct subtraction is effected. Multiplexed output register 160 receives the relative coordinate values of the control points of the Bezier curve. Line 162 indicates a conceptual bus interconnection. For brevity, the actual hardware realization is ignored. Element 164 is an on-the-fly discriminator for executing various tests on the set of control points of any actual Bezier curve or part thereof. If all control points of a Bezier curve have the same signs for either relative x coordinate values or for relative y coordinate values, the actual point is outside the bounding box and only the contribution of this edge to the number of crossings must be calculated. If all control points are in a 2x2 square, further division will not yield new information and the halving process may be discontinued. If the actual point coincides with either one of the end points, no further halving is necessary. An associated signalization of the above to a sequencer device not shown appears on output 166. Thereupon a next Bezier curve from memory 150 is accessed. In such accessing, the signalization of m on line 168 to the sequencer controls the number of control points that must be read from memory 150. For the set-up shown, this number is limited to 4 maximum. In reading out a new set of control points, the last thereof is intermediately stored in register 170, to be retained as the first control point of the next curve of the trajectory: contiguous sides have their end points in common and double storage in memory 150 is not effected. The control points are now loaded in succession in registers 172, 174, 176, 178. Because the test in element 164 had given a negative outcome, the dividing process is effected by an array of adders each provided with an output register 180-190. In adding the full number of bits is retained so that effectively, the number of significant bits increases by one each time. Thereafter, the control points of the second part of the Bezier curve are stored in registers 172, 180, 186, 190 as far as required: the first two are always filled, the latter two only if the original number of control points suffice. For a Bezier curve of order 1 the control points of the first part are now stored in registers 174, 180. For a Bezier curve of order 2 the control points of the first half are now stored in registers 176, 182, 186. For a Bezier curve of order 3 the control points of the first part are now stored in registers 178, 184, 188, 190. The control points of the first part are now read out from their associated registers under hardwired shifting to their standard number of significant bits and via bus 162 and are cycled in the same way as was done for the original Bezier curve, including the test done by element 164. Furthermore, the control points of the second part are now read from the relevant registers via a similar hardwired shift to a second bus system 192 for storage in stack memory 194, that has a last-in-first-out organization. Element 196 on-the-fly executes similar tests as does element 164. If the test results indicate that the Bezier curve part needs no more processing in the array, storage in stack 194 is omitted, and a relevant signalization is carried on line 198 towards the sequencer. If element 164 signals that no further processing needs to be done on the control point set received, first stack 194 is accessed, and the process repeats. Finally, after all parts of the Bezier curve in question have been treated, a new set of control points is read out from store 150 (inclusive of the first control point from register 170). In principle, element 196 may be omitted, in that its tests are duplicated by element 164. The set-up shown diminishes the storage capacity needed in stack 194.

Figure 4b gives a modification in Figure 4a that allows for less hardware without significant slowing down of the operation. The number of registers is the same as in Figure 4a. In the first column, register 200 receives the first control point C1 (via bus 162, from register 170 or store 150). Next, the contents shift to register 202 and the second control point is received C2. Next, adder 206 calculates the sum thereof: C1+C2, which is stored in register 208. Next, all the contents shift and the third control point is received: C3. The registers now contain, C3, C2, C1, -; C1+C2, -, -; -, -; -. Next, the fourth control point is received and adder 206 executes an operation to give the following stored results: C4, C3, C2, C1; C3+C2, C2+C1, -, -; -. Next, all contents shift downwards and adders 206, 214 execute an operation to give the following results: -, C4, C3, C2; C4+C3, C3+C2, C2+C1; C3+2C2+C1, -; -. After the following shift and on adding operation by adders 214, 220 the following stored results are acquired: -, -, C4, C3; -, C4+C3, C3+C2; C4+2C3+C2, C3+2C2+C1; -. After a final shift and an adding operation by adder 220 the following stored results are acquired: -, -, -, C4; -, -, C4+C3; -, C4+2C3+C2; C4+3C3+3C2+C1. The quantities C4, C4+C3, C4+2C3+C2 and C4+3C3+3C2+C1 are outputted on lines 228, 231, 234, 236 to bus organization 192. The quantities C1, C2+C1, C3+2C2+C1, C4+3C3+3C2+C1 are outputted on lines 226, 230, 232, 248 to bus organization 162. For brevity of description, the relative timing among the various additions is not shown. In fact, the information of any new control point may be outputted directly when available.

IMPLEMENTATION OF FINITE BRUSH

Figure 4c gives a hardware set-up for implementing dilation by a non-zero brush. To a large part, the set-up corresponds to Figure 4a and this part is not considered in detail. The store 250 now contains the control points of the trajectory, and also the dimensions of the bounding box containing all control points of the brush shape, or, for that matter, any reasonable box containing all actual points of the brush shape. The hardware between memory 250 and bus structure 252 corresponds 1 to 1 to Figure 4a; inclusive of register 270. The array 254 corresponds to Figure 4a. For brevity, the modification according to Figure 4b is ignored. Register 256 receives relative application coordinates with respect of the point for which the color is to be determined, of the first control point of the next Bezier curve. Adder 258 thereupon receives any further control point of that curve, after which the two are subtracted (258); note the -1 inserted for correct two's complement subtraction. Box 260 executes a test that would indicate that all control points would lie in a 2x2 point square. If so, division of the Bezier curve (part) in question is not useful, and the array 254 need not come into action which is signalled on line 262 to the sequencer not shown. Line 263 gets the x,y coordinates of the lower left hand corner of the brush bounding box (with respect to its guiding centre). Adder 266 adds this to the associated (relative) x,y coordinates of any control point of the trajectory curve (part) and element 272 tests whether for at least one of the control points the result for the x-coordinate is negative and for at least one control point the result for the y-coordinate is negative. These two control points may be a single or two different control points. A similar set-up is present for the maximum x,y values of the brush bounding box (i.e. the upper right hand corner). Here the test is, whether for at least one control point the result for the x-coordinate is positive and for at least one control point (the same one or another) the result for the y-coordinate is positive. If both tests of blocks 262, 274 are positive, the point in question is inside the dilated bounding box. From the signalization on lines 262, 276, 280 the sequencer, not shown, will derive, whether a new Bezier curve may be accessed, from store 250 or from stack 286, or whether the array 254 must carry out a subdivision operation. A bus structure 278 is present on the other side of array 254. Also, a similar stack 286 is present as in Figure 4a. If the actual point considered is within the brush bounding box, when the brush reference point is positioned on the first or the last control point of the Bezier curve part in question, the actual brush must be accessed. This is done in the set-up of Figure 4a. To this effect, the end point coordinates of the relevant Bezier curve are outputted via inverter 288 with addition of 1 in adder 290: note that these are relative control point coordinates that now appear as defined in the coordinate system of the positioned brush. These point coordinates are now stored in register 154 of Figure 4a. Further, a reset is given on line 292 to address generator 152. After determination whether the point was inside or outside the brush, a signal from the set-up of Figure 4a is sent to the sequencer. No further interaction between the respective hardware of Figures 4a, 4c is necessary. Of course, for a comprehensive device, various subsystems may be shared among these two Figures.

The above disclosure related to the case where the trajectory did not define an inner shape. If it does, the only additional test required is for determining the number of intersections of the closed trajectory curve and a semi-infinite line through the point in question. In itself this test has been described in the referenced patent. The associated division operations the Bezier curve parts in question may be executed by a logic corresponding to Figure 4c, but with a test mechanism added that is equal to box 164 in Figure 4a. If the point in question is either inside the trajectory shape or anywhere inside the brush when moved, the associated pixel gets the-inside-coloring. The decision on whether first the trajectory test or first the brush test or both operations in parallel, may be optimized for maximum speed. Among other things, this may be determined by the character of the data structure, the dimensions and shape of brush and trajectory.

USE OF RATIONAL BEZIER CURVES (RB)

Any arbitrary curve can be approximated to an arbitrary accuracy by a piecewise non-rational Bezier curve. However, in certain circumstances, rational Bezier curves would be used for the brush, in particular, because circles and ellipses cannot be directly written as a non-rational Bezier curve.

The continuous plane formula for rational Bezier curves is given by:

$$RB(t) = \frac{\displaystyle\sum_{i=0}^{i=m} w_i C_i \binom{m}{i} t^i (1-t)^{m-i}}{\displaystyle\sum_{i=0}^{i=m} w_i \binom{m}{i} t^i (1-t)^{m-i}}$$

where each control point $C_i$ in the plane is weighted by the usual polynomials and an additional weigth factor $w_i$. The most obvious difference is of course the denominator which is a scalar function of t that is applied to all control points (and to their x- and y-coordinates) equally. A discrete counterpart for this formula (involving only simple and stable operations in our discrete world space) is most probably non-existent. As the only assumption made about our regions is that they should have a finite extent, it will be assumed from now on that all weighted control points $w_i C_i$ are bounded and that the denominator function is nowhere equal to zero along the curve segment.

A better formula results from "multiplying out" the denominator to become the third coordinate of the curve points in a now three-dimensional space. In this space the formula is obtained for an ordinary non-rational Bezier curve that is defined by the control points with 3D-coordinates $(w_i C_{ix}, w_i C_{iy}, w_i)$. The rational curve can be seen as the perspective projection of the non-rational curve onto the $w = 1$ plane, or said otherwise: the non-rational curve lies on the infinite cone segment with the origin of the 3D-space as its apex and supported by the rational curve.

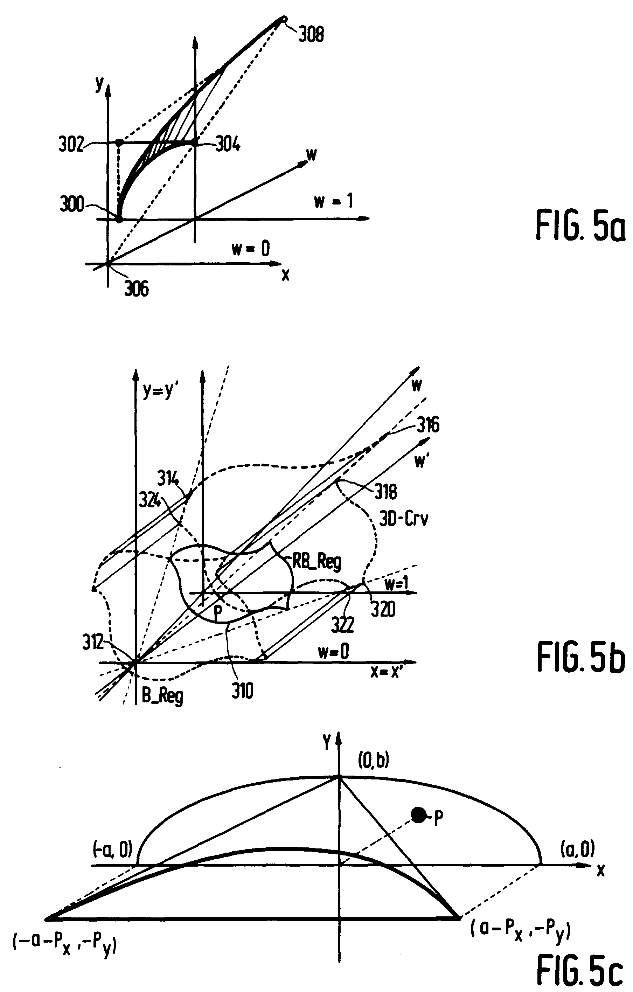

In this respect Figure 5a shows a 2-dimensional rational Bezier curve in the plane $w = 1$. For simplicity, only three control points 300, 302, 304 are assumed. The origin is at 306. The 3-dimensional non-rational counterpart lies on the same cone segment and has end points 300, 308. As will be shown hereinafter, the two curves need not have any point in common. One consequence of such a generalization of the curve definition is that the w-coordinate has to be divided out again to obtain the coordinates of the curve segment division points in the 2D plane, and to detect if the stopping condition is reached which requires the control points to be one discrete world plane "pixel" apart. Division is however a highly undesirable operation if it needs to be implemented robustly with simple and stable finite precision arithmetic.

The following solution is used. The point containment for these regions in the discrete plane is defined not via the definition of discrete rational outline curves, but deduced as the counterpart of a higher level topological property in the continuous space. Imagine a closed piecewise rational Bezier outline in the $w = 1$ plane which is our 2D modelling plane. The non-rational versions of the segments all lie on the cone supported by the outline.

Figure 5b shows a closed rational Bezier path 310 that consists of three rational curves (in practice non-rational and rational curves may occur in mixed fashion). The origin 312 has radii in dashed representation. The corresponding 3-dimensional non-rational curves have been shown as dashed curves 314/316, 318/320; and 322/324, respectively. The respective curves may not be connected directly because of different values of w in the respective end points. However, the joining may be effected by dashed segments 316/318, 320/322, 324/314 that are radii of the same cone. If the point is contained by the 2D region, the ray through this point and the origin will be inside the cone volume too. The topological property is that this ray will then also be inside a cylinder volume that is parallel to this ray and has that piecewise non-rational 3D curve as its supporting curve (and vice versa). The same applies to the intersections of both cylinder and ray with the w = 0 plane: to check point containment by the RB-Region (rational Bezier) it suffices to test if the origin is contained by the outline that results from the parallel projection of the non-rational 3D curves onto the w = 0 plane through the origin. Note that this projection is parallel with that ray, so usually not orthogonal to the plane. Since Bezier curves are invariant under parallel projections, this projected region is nothing other than a normal B-Region (Bezier) for which the point containment problem was solved earlier. The projected non-rational curve segments are defined by their projected control points of which the x- and y-coordinates can be seen to be equal to those of the non-orthogonal axis system defined by the orignal x and y axes and a w'-axis coincident with the ray through the 3D origin and the point in question, P, in the w = 1 plane. The relevant part of the coordinate transformation matrix is:

$$\begin{pmatrix} C'_{ix} \\ \\ C'_{iy} \end{pmatrix} = (wiCix \; wiCiy \; wi) \begin{pmatrix} 1 & 0 \\ 0 & 1 \\ -P_x & -P_y \end{pmatrix} = (wi(Cix-Px) \; wi(Ciy-Py))$$

and thus each rational Bezier control point with a weight factor that is not equal to one, needs a multiplication for its x- and y-coordinates before it enters the algorithm of the previous sections (where the point for which we test point containment is always the origin). Note that if all weights were equal to one (so we had a non-rational B_Region to start off with), this information reduces to the translation of the point in question to the origin. Note also that the straight line segments on the cone that we introduced to construct a closed curve in 3D, can have no influence on the number of intersections with the semi-infinite straight line used to determined the inside-outside indication. In fact, the only way they can have a point in common with the semi-infinite line would be by fully being coincident with that line.

So the point containment for RB-Regions has been defined by transforming the control points to another region in the discrete plane for which we had already specified point containment regarding its outline. The only new operations introduced hereby are fixed point multiplications that need to be done for each truly rational control point, once for each point in question. The best numerical results are obtained if the $w_i$'s of all control points of an RB-Curve are scaled while modeling with a common factor to maximize their number of significant bits.

We can even cut back drastically on the number of multiplications if we have the quite typical case of curves with all positive weights. Then the convex hull property is still valid, so we only need to multiply if the point in question is contained in the box around the convex hull of the control points $C_i$ of one of the outline segments.

With this general algorithm, we can put constraints on the input regions and obtain simplified versions of the algorithm. This leads to useful results for the case of an elliptical region outlined by two semi-elliptical curve segments ending on the main axis. If the main axes have lengths 2a and 2b, the first and last control point lie at (-a,0) and (a,0), both with weights equal to 1. The middle control point degenerates in the general conic formula to the point at infinity along the 2D y-axis, but with zero weight: the control point of the corresponding 3D parabola lies at $(w_1 C_{1x}, w_1 C_{1y}, w_1)$ = (0,b,0). Transforming this control point through the above matrix (i.e. parallel projecting it into the w = 0 plane), gives a constant (0,b), independent of P. Thus checking if $(P_x, P_y)$ is contained in the (upper half of the) ellipse, can be done by first checking if it is within the box diagonalized by (-a,0) and (a,b), and if so, to check if the parabola controlled by $(-a-P_x, P_y)$, (0,b), and $(a-P_x, -P_y)$ intersects the negative x-axis once, (see Figure 5c). For this special case no multiplications are needed: we only have to suppress in the non-rational algorithm the "origin translation" of the second control point. The algorithm will be as precise and numerically stable as it was before, and reveal the point containment result fast for points far from the elliptical outline, and logarithmically slower for points closer to it, with a lower bound on the speed defined by the modeling precision in the discrete world space. Thus, the modification necessary to the hardware in Figures 4a, c would be slight.

ACCELERATION OF THE DETERMINATION

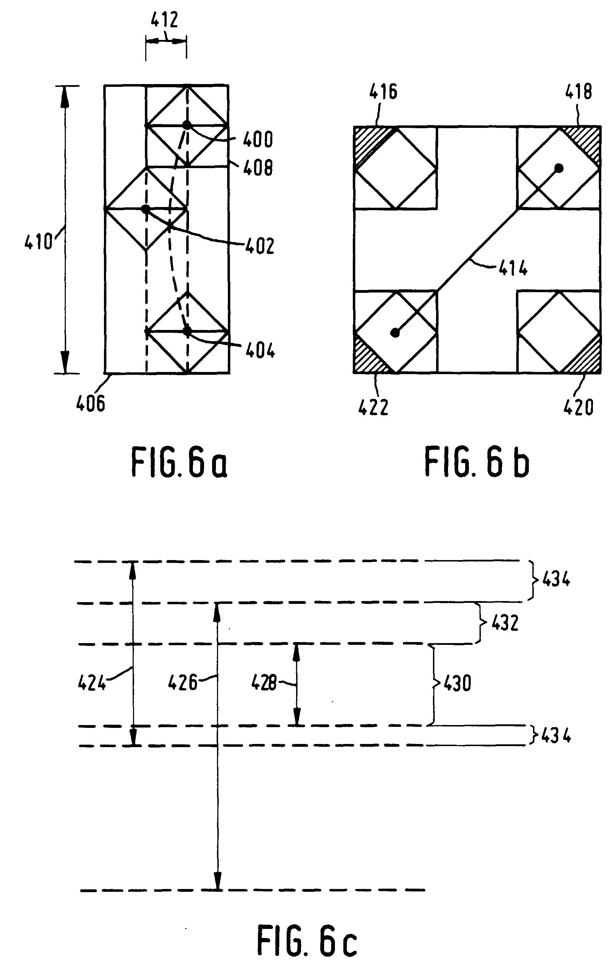

Hereinafter, several acceleration stratagems are given for the calculation explained with respect to Figure 3f. The first improvement is reached for determining whether a particular category of points is ever covered by the brush, provided that the latter covers all points within the brush bounding box on either a horizontal or on a vertical line through its guiding centre. This indeed is the case in Figure 3f, and also applies to circles, ellipses and rectangles where the guiding center is the point of gravity of such symmetric brush shape. The calculation is as follows: determine whether a vertical line through the point in question crosses the horizontal diameter of the brush when the brush' guiding center is positioned in all respective control points of the trajectory curve. If the determination is always positive for any control point, the point in question will be covered by the brush and the divisioning operation is not necessary and the color assignation may be effected directly. The termination also may result if a horizontal line through the actual point would cross all vertical diameters. In the situation of Figure 3f, however, the next division step is necessary. For a vertical or horizontal straight trajectory, however, the division would be superfluous. However, the method gives a correct result for any degree guiding curve. In principle, the method may like wise be effected along an oblique axis, provided that the brush shape conforms. Usually, the coordinate transform required would negate the acceleration reached. Figure 6a shows an example. The curved trajectory (broken line) has three control points 400, 402, 404. The brush is diamond-shaped as shown. The dilated box 406 is shown with one position of the brush bounding box 408. It can be proven for any kind of Bezier curve that the rectangle given by the height of the dilated bounding box (410) and the AND-ing of the horizontal diameters of the brush bounding boxes as shown (arrow 412) is always covered by the moving brush. Therefore, color assignment may be done straightaway.

The second improvement also obviates the need for executing the divisioning in cases where the point in question is the extreme corners of the dilated bounding box. Figure 6b shows a straight trajectory with the same brush shape as in Figure 6a. The brush boxes are positioned in each of the corners of the bounding box. For each of these positions, the points in the coherent non-brush regions of the bounding box that are contiguous to a corner of the dilated box are excluded from further consideration for the trajectory in question. If the degree of the trajectory is higher, the positions of the brush bounding boxes in the corners need not be coincident with any real position. The determination of whether the point in question is in any of hatched regions 416-422 is taken in the intersection procedure for the brush. The determination of which corner part be excluded is determined as follows: determine the relative coordinates of all control points with respect to the actual point under consideration. If both all relative x-coordinates have the same sign and all relative y-coordinates have the same sign, the point in question is considered outside. The third improvement limits the number of trajectories to be considered in the intersection procedure. To this effect, all intersecting semi-infinite lines are parallel and, preferably, parallel to one of the coordinate axes, for example, horizontal. Now, for any actual point, only those curves would be relevant, whose dilated (if trajectory) or non dilated (brush procedure) bounding box would be covered by the horizontal infinite line through the actual point. All points on this line would therefore consider the same subset of trajectory curves. AND-ing of the vertical dimensions of this subset of trajectory curves gives a set of contiguous rows of pixels for which only the same subset of trajectory curves need be accessed. In Figure 6c the heights of three dilated boxes are shown as 424, 426, 428. For the points on the lines in region 430 all three trajectories must be processed, starting with the "determination procedure". For those in region 432 only trajectories 424, 426 must be considered. For those in regions 434, only trajectory 424 need be considered. For other cases still further subsets would apply, not shown here in more detail.

## Claims

1. A computer method for pixel-wise generating a display picture representing an object set of object elements, including a brush object element (Figures 1c, 1d, Figure 3f, 100-120-122) that is a Bezier shape to be moved with its guiding centre along a guiding trajectory (100-102-104) that is a non-rational Bezier path included in said object set, said method comprising the steps of:

    a. for each trajectory Bezier curve providing a trajectory set of trajectory control points in an associated coordinate-wise oriented trajectory curve bounding box (100, 106, 116, 118), and for each brush Bezier curve providing a brush set of brush control points in an associated brush curve bounding box, (100, 120, 124, 122) and providing a brush bounding box containing all points of the brush shape;
    b. for each pixel determining application coordinate values regarding any relevant object element for an actual point corresponding to that pixel, and then dilating each respective trajectory curve bounding box with the brush bounding box to a dilated box (100-110-114-118) and
    c. in a determination procedure determining for said actual point either:

        c1. actual point outside dilated box (132) then reject trajectory curve in question and go to another trajectory curve, or
        c2. actual point inside brush bounding box (126-128) when brush guiding centre positioned in either end point of actual trajectory curve, then execute brush procedure with respect to such end point, but
        c3. otherwise (130) execute a division procedure on the trajectory Bezier curve in question and take any part as secondary trajectory Bezier curve, for processing in said determination procedure;

    d. in the brush procedure for any brush Bezier curve determining for said actual point either:

        d1. actual point outside brush Bezier curve bounding box then go to intersection procedure, or
        d2. actual point coincides with any brush Bezier curve end point then exit to assignment procedure, or

d3. all control points of brush Bezier curve lie in a 2x2 discrete point square then go to intersection procedure, but

d4. otherwise execute division procedure on brush Bezier curve in question and take any part as secondary brush Bezier curve for processing in said brush procedure;

e. in said intersection procedure determine a number of intersections of a particular semi-infinite line starting in said actual point with an actual brush Bezier curve and accumulating said number, until all brush Bezier curves have been processed in the brush procedure and then in case of an odd accumulation result going to said assignment operation but otherwise return to said determination procedure while resetting the accumulation;

f. in said assignment procedure assigning an -inside- indication to the pixel in question and exit;

g. but otherwise assigning an -outside- indication to the pixel in question, and exit.

2. A method as claimed in Claim 1, wherein in said determination procedure in conjunction with steps c1, c2 it is tested whether all control points of the actual trajectory Bezier curve lie in a 2x2 discrete point square then go to said brush procedure, with brush positioned in either end point of actual trajectory Bezier curve.

3. A method as claimed in claim 1, wherein said semi-infinite line has a first coordinate-wise direction, and in conjunction with steps c1, c2 it is tested whether a straight line through the actual point and perpendicular to said first coordinate wise direction would cross always the brush shape when it be positioned with its guiding center on any arbitrary control point of the actual trajectory curve and in the positive case go to assignment procedure.

4. A method as claimed in Claim 1, wherein in point c2 the brush procedure is accessed when actual point is in brush bounding box when brush bounding box coincides with any corner of dilated box and in the brush procedure it is tested whether actual point is outside the brush but in a coherent area that is contiguous with a corner of the dilated box, and in the positive case go to another trajectory curve.

5. A method as claimed in Claim 1, wherein in conjunction with step c1 said outside result disqualifies the trajectory curve in question for consideration with respect to any actual point on an infinite line coinciding with said semi-infinite line, provided said infinite line does not cross the dilated box.

6. A method as claimed in Claim 5, wherein the size perpendicular to said infinite line of said dilated box is NOR-ed in at least a subset of the trajectory curves to yield a non-coincidence with respect to a set of parallel contiguous lines of points comprising said infinite line, and any trajectory curve within said subset is disqualified for consideration with respect to any actual point on any line of said set.

7. A method as claimed in any of Claims 1 to 6, wherein said guiding trajectory is a closed shape and also defines said-inside- indication, wherein said brush procedure is also executed on the trajectory in isolation, which then operates as a second, stationary, brush.

8. A method as claimed in Claim 7 wherein an -inside- indication generated with respect to said trajectory overrules any -outside- indication resulting from processing of the brush shape.

9. A method as claimed in any of Claims 1 through 8, wherein any -inside- indication produced for an actual pixel terminates processing of that pixel.

10. A method as claimed in any of Claims 1 to 9, wherein said brush shape has a dimension that is variable in application coordinates for keeping its dimension fixed in display device coordinates under any zooming/dezooming operation.

11. A method as claimed in any of Claims 1 to 10, wherein said guiding trajectory defines an alfanumerical character.

12. A method as claimed in any of Claims 1 to 11, wherein said guiding trajectory interconnects two closed figures.

13. A method as claimed in any of Claims 1 to 12, for determining spatial coherence within a display window with respect to a region that is outlined by a second closed Bezier path, to be displayed, wherein said second path operates as said guiding trajectory and said window is spatially inverted with respect to an origin point, said origin thereupon operating as guiding centre, and a result of said inverting operating as brush, after which any -inside-indication for said origin point signals non-coherence.

**14.** A method as claimed in any of Claims 1 through 13, for use on a multicolor display apparatus.

**15.** A method as claimed in any of Claims 1 through 14, for use on a text processor device.

**16.** A method as claimed in any of Claims 1 through 15, for use on a graphics processing system.

**17.** A method as claimed in any of Claims 1 through 16, wherein said brush shape contains a rational Bezier curve that by means of conical projection with respect to a second origin is transferred into a non-rational Bezier curve in three dimensions, which by means of cylindrical projection parallel to the junction line between the second origin and the actual point transfers to a further non-rational Bezier shape for which the point containment result of the second origin is identical to the point containment of the original point in question with respect to the original brush shape.

**18.** A method as claimed in Claim 17, wherein the brush shape contains at least one conic section.

**19.** A method as claimed in Claim 18, wherein said brush shape consists exclusively of conic section parts.

**20.** A method as claimed in Claim 19, wherein such brush shape is a single conic section.

**21.** A method as claimed in Claim 20, wherein said brush shape is a circle.

**22.** A method as claimed in Claim 20, wherein said brush shape is an ellipse.

**23.** A method as claimed in any of Claims 1 through 16, wherein said brush shape is a rectangle.

**24.** An apparatus for executing a computer method for pixel-wise generating a display picture representing an object set of object elements, including a brush object element Figures (1c, 1d, Figure 3f, 100-120-122) that is a Bezier shape to be moved with its guiding centre along a guiding trajectory (100-102-104) that is a non-rational Bezier path included in said object set, said method comprising the steps of:

a. for each trajectory Bezier curve providing a trajectory set of trajectory control points in an associated coordinate-wise oriented trajectory curve bounding box (100, 106, 116, 118) and for each brush Bezier curve providing a brush set of brush control points in an associated brush curve bounding box (100, 120, 124, 122), and providing a brush bounding box containing all points of the brush shape;

b. for each pixel determining application coordinate values regarding any relevant object element for an actual point corresponding to that pixel, and then dilating each respective trajectory curve bounding box with the brush bounding box to a dilated box (100-110-114-118) and

c. in a determination procedure determining for said actual point either:

c1. actual point outside dilated box (132) then reject trajectory curve in question and go to another trajectory curve, or

c2. actual point inside brush bounding box (126-128) when brush guiding centre positioned in either end point of actual trajectory curve, then execute brush procedure with respect to such end point, but

c3. otherwise (130) execute a division procedure on the trajectory Bezier curve in question and take any part as secondary trajectory Bezier curve, for processing in said determination procedure;

d. in the brush procedure for any brush Bezier curve determining for said actual point either:

d1. actual point outside brush Bezier curve bounding box then go to intersection procedure, or

d2. actual point coincides with any brush Bezier curve end point then exit to assignment procedure, or

d3. all control points of brush Bezier curve lie in a 2x2 discrete point square then go to intersection procedure, but

d4. otherwise execute division procedure on brush Bezier curve in question and take any part as secondary brush Bezier curve for processing in said brush procedure;

e. in said intersection procedure determine a number of intersections of a particular semi-infinite line starting in said actual point with an actual brush Bezier curve and accumulating said number, until all brush Bezier curves have been processed in the brush procedure and then in case of an odd accumulation result going to

EP 0 342 752 B1

said assignment operation but otherwise return to said determination procedure while resetting the accumulation;

f. in said assignment procedure assigning an -inside- indication to the pixel in question and exit;

g. but otherwise assigning an -outside- indication to the pixel in question, and exit, said apparatus comprising:

- first storage means for selectably storing a sequence of trajectory control point coordinates and edge coordinates of said brush bounding box (250);
- second storage means for storing coordinates of said actual point (154)
- first calculating means fed by said first and second storage means for calculating relative coordinates of said trajectory control points;
- first test means fed by said first calculating means for testing on all control points of a Bezier curve to lie in a 2 point x 2 point square (260);
- second calculating means fed by said first storage means and second storage means for calculating relative values of edges of the dilated box (266);
- second test means fed by said second calculating means for testing whether the actual point is outside said dilated box (272, 274);
- third calculating means fed by said first calculating means for calculating control points of a divided trajectory Bezier curve and feeding these to said first and second test means for conditional retrocoupling to its own input;
- said apparatus furthermore having an output means fed by said first calculating means for outputting processed control points to a brush procedure processing means.

25. An apparatus as claimed in Claim 24, wherein said third calculating means is an array means for coincidentally calculating at least two output control points as intermediate point between respective pairs of input control points.

26. An apparatus as claimed in Claim 24, wherein said array means has a single file of adders that has a serial pipeline organization and a plurality of parallel outputs.

27. An apparatus as claimed in Claim 24, wherein said brush procedure processing means has at least a trajectory Bezier curve dividing means in common with said third calculating means.

28. An apparatus as claimed in Claim 24, wherein a third storage means is provided to an output of said third calculating means for stackwise storing control points of at least one divided trajectory Bezier curve, for later processing in said third calculating means.

**Patentansprüche**

1. Rechnerverfahren zur pixelweisen Erzeugung eines Anzeigebildes, das einen Objektelementensatz mit einem Pinselobjektelement (Figuren 1c, 1d, Figur 3f, 100-120-122) darstellt, welches eine Bezier-Form ist, die mit ihrem Führungszentrum auf einer Führungsbahn (100-102-104) entlangbewegt wird, die ein nicht-rationaler Bezier-Pfad in dem genannten Objektsatz ist, wobei das Verfahren folgende Schritte umfaßt:

a. für jede Bahn-Bezier-Kurve einen bahnbezogenen Satz von Bahnsteuerpunkten in einem zugehörigen koordinatenartig orientierten Bahnkurven-Begrenzungskasten (100, 106, 116, 118) liefern und für jede Pinsel-Bezier-Kurve einen pinselbezogenen Satz von Pinselsteuerpunkten in einem zugehörigen Pinselkurven-Begrenzungskasten (100, 120, 124, 122) liefern, und einen Pinsel-Begrenzungskasten mit allen Punkten der Pinselform liefern;

b. für jedes Pixel Anwendungs-Koordinatenwerte hinsichtlich jedes relevanten Objektelementes für einen tatsächlichen Punkt bestimmen, der mit diesem Pixel übereinstimmt, und anschließend erweitern jedes entsprechenden Bahnkurven-Begrenzungskastens mit dem Pinsel-Begrenzungskasten zu einem ausgeweiteten Kasten (100-110-114-118) und

c. in einem Bestimmungsverfahren für den genannten tatsächlichen Punkt bestimmen, entweder:

c1. tatsächlicher Punkt liegt außerhalb des ausgeweiteten Kastens (132), dann fragliche Bahnkurve zurückweisen und zu einer anderen Bahnkurve gehen, oder

c2. tatsächlicher Punkt liegt innerhalb des Pinsel-Begrenzungskasten (126-128), wenn das Pinsel-Führungszentrum in einem der Endpunkte der tatsächlichen Bahnkurve positioniert ist, dann Pinselprozedur mit Bezug auf einen solchen Endpunkt ausführen, aber

c.3 andernfalls (130) eine Teilungsprozedur für die betreffende Bahn-Bezier-Kurve ausführen und einen beliebigen Teil als sekundäre Bahn-Bezier-Kurve zur Verarbeitung in der genannten Bestimmungsprozedur nehmen;

d. in der Pinselprozedur für jede Pinsel-Bezier-Kurve für den genannten tatsächlichen Punkt bestimmen, entweder:

d1. tatsächlicher Punkt liegt außerhalb des Pinselkurven-Begrenzungskastens, dann zur Schnittpunkt-Prozedur gehen, oder
d2. tatsächlicher Punkt deckt sich mit einem Pinsel-Bezier-Kurven-Endpunkt, dann beenden und mit Zuordnungs-Operation fortfahren, oder
d3. alle Steuerpunkte der Pinsel-Bezier-Kurve liegen in einem diskreten 2x2-Punkt-Quadrat, dann zur Schnittpunkt-Prozedur gehen, aber
d4. andernfalls die Teilungsprozedur für die betreffende Pinsel-Bezier-Kurve ausführen und einen beliebigen Teil als sekundäre Pinsel-Bezier-Kurve zur Verarbeitung in der genannten Pinselprozedur nehmen;

e. in der genannten Schnittpunkt-Prozedur eine Anzahl von Schnittpunkten von einer bestimmten quasi-unendlichen Linie beginnend in dem genannten tatsächlichen Punkt mit einer tatsächlichen Pinsel-Bezier-Kurve bestimmen und die genannte Anzahl akkumulieren, bis alle Pinsel-Bezier-Kurven in der Pinsel-prozedur verarbeitet sind und dann im Falle eines ungeradzahligen Akkumulationsergebnisses zu der genannten Zuordnungs-Operation gehen, aber andernfalls zu der genannten Bestimmungsprozedur zurückkehren und dabei die Akkumulierung zurücksetzen;
f. in der genannten Zuordnungsprozedur dem betreffenden Pixel eine "Innerhalb"-Angabe zuweisen und Prozedur beenden;
g. aber andernfalls dem betreffenden Pixel eine "Außerhalb"-Angabe zuweisen und Prozedur beenden.

2. Verfahren nach Anspruch 1, wobei in der genannten Bestimmungsprozedur in Verbindung mit den Schritten c1, c2 geprüft wird, ob alle Steuerpunkte der tatsächlichen Bahn-Bezier-Kurve in einem diskreten 2x2-Punkt-Quadrat liegen und dann zu der genannten Pinsel-Prozedur weitergegangen wird, wobei der Pinsel an einem der Endpunkte der tatsächlichen Bahn-Bezier-Kurve positioniert ist.

3. Verfahren nach Anspruch 1, wobei die genannte quasi-unendliche Linie eine erste koordinatenartige Richtung hat, und in Verbindung mit den Schritten cl, c2 geprüft wird, ob eine Gerade durch den tatsächlichen Punkt und senkrecht zu der genannten ersten koordinatenartigen Richtung immer die Pinselform schneiden würde, wenn sie mit ihrem Führungszentrum auf einen beliebigen Steuerpunkt der tatsächlichen Bahnkurve positioniert wird, wobei im positiven Fall mit der Zuordnungs-Prozedur fortgefahren wird.

4. Verfahren nach Anspruch 1, wobei in Punkt c2 auf die Pinsel-Prozedur zugegriffen wird, wenn der tatsächliche Punkt in dem Pinsel-Begrenzungskasten liegt, wenn sich der Pinsel-Begrenzungskasten mit irgendeiner Ecke des ausgeweiteten Kastens deckt und wobei in der Pinsel-Prozedur geprüft wird, ob der tatsächliche Punkt außerhalb des Pinsels, aber in einem kohärenten Gebiet liegt, das an eine Ecke des ausgeweiteten Kastens angrenzt, wobei im positiven Fall mit einer weiteren Bahnkurve fortgefahren wird.

5. Verfahren nach Anspruch 1, wobei in Verbindung mit Schritt cl das genannte "Außerhalb"-Ergebnis die betreffende Bahnkurve von der Betrachtung hinsichtlich eines tatsächlichen Punktes auf einer unendlichen Linie, die sich mit der genannten quasi-unendlichen Linie deckt, ausschließt, vorausgesetzt, die genannte unendliche Linie schneidet nicht den ausgeweiteten Kasten.

6. Verfahren nach Anspruch 5, wobei die Größe senkrecht zu der genannten unendlichen Linie des genannten ausgeweiteten Kastens in mindestens einer Teilgruppe von Bahnkurven mit NICHT/ODER verknüpft wird, um eine Deckungsungleichheit hinsichtlich einer Gruppe von parallelen angrenzenden Punktlinien zu liefern, welche die genannte unendliche Linie enthält, und wobei eine Bahnkurve innerhalb der genannten Teilgruppe von der Betrachtung hinsichtlich eines tatsächlichen Punktes auf einer Linie der genannten Gruppe ausgeschlossen wird.

7. Verfahren nach einem der Ansprüche 1 bis 6, wobei die genannte Führungsbahn eine geschlossene Form ist und auch die genannte "Innerhalb"-Angabe definiert, wobei die genannte Pinsel-Prozedur ebenfalls getrennt für die Bahn ausgeführt wird, welche dann als zweiter, stationärer Pinsel dient.

**8.** Verfahren nach Anspruch 7, wobei eine "Innerhalb"-Angabe hinsichtlich der genannten Bahn Vorrang vor jeder "Außerhalb"-Angabe hat, die sich aus der Verarbeitung der Pinselform ergibt.

**9.** Verfahren nach einem der Ansprüche 1 bis 8, wobei jede für ein tatsächliches Pixel erzeugte "Innerhalb"-Angabe die Verarbeitung dieses Pixels beendet.

**10.** Verfahren nach einem der Ansprüche 1 bis 9, wobei die genannte Pinselform eine Abmessung hat, die in Anwendungs-Koordinaten variabel ist, um ihre Abmessung bei Zoom/Entzoom-Operationen in Anzeigegerät-Koordinaten konstant zu halten.

**11.** Verfahren nach einem der Ansprüche 1 bis 10, wobei die genannte Führungsbahn ein alphanumerisches Zeichen definiert.

**12.** Verfahren nach einem der Ansprüche 1 bis 11, wobei die genannte Führungsbahn zwei geschlossene Figuren miteinander verbindet.

**13.** Verfahren nach einem der Ansprüche 1 bis 12, um die räumliche Kohärenz innerhalb eines Anzeigefensters in bezug auf eine anzuzeigende Region zu bestimmen, die durch einen zweiten geschlossenen Bezier-Pfad umrissen ist, wobei der genannte zweite Pfad als Führungsbahn dient und das genannte Fenster in bezug auf einen Ursprungspunkt räumlich invertiert ist, wobei der genannte Ursprung daraufhin als Führungszentrum dient, und ein Ergebnis der genannten Invertierungs-Operation als Pinsel dient, wonach jede "Innerhalb"-Angabe für den genannten Ursprungspunkt eine Nicht-Kohärenz signalisiert.

**14.** Verfahren nach einem der Ansprüche 1 bis 13 zur Verwendung für eine mehrfarbige Anzeigevorrichtung.

**15.** Verfahren nach einem der Ansprüche 1 bis 14 zur Verwendung für eine Textverarbeitungsvorrichtung.

**16.** Verfahren nach einem der Ansprüche 1 bis 15 zur Verwendung für ein Graphikverarbeitungssystem.

**17.** Verfahren nach einem der Ansprüche 1 bis 16, wobei die genannte Pinselform eine rationale Bezier-Kurve enthält, die mit Hilfe einer konischen Projektion in bezug auf einen zweiten Ursprung in eine nicht-rationale Bezier-Kurve in drei Dimensionen übertragen wird, welche sich mit Hilfe einer zylindrischen Projektion parallel zu der Verbindungslinie zwischen dem zweiten Ursprung und dem tatsächlichen Punkt zu einer weiteren nicht-rationalen Bezier-Form wandelt, für die das Punktgehalt-Ergebnis des zweiten Ursprungs identisch ist mit dem Punktgehalt des betreffenden ursprünglichen Punktes in bezug auf die ursprüngliche Pinselform.

**18.** Verfahren nach Anspruch 17, wobei die Pinselform mindestens einen konischen Abschnitt enthält.

**19.** Verfahren nach Anspruch 18, wobei die genannte Pinselform ausschließlich aus konischen Abschnitt-Teilen besteht.

**20.** Verfahren nach Anspruch 19, wobei die genannte Pinselform ein einzelner konischer Abschnitt ist.

**21.** Verfahren nach Anspruch 20, wobei die genannte Pinselform ein Kreis ist.

**22.** Verfahren nach Anspruch 20, wobei die genannte Pinselform eine Ellipse ist.

**23.** Verfahren nach einem der Ansprüche 1 bis 16, wobei die genannte Pinselform ein Rechteck ist.

**24.** Gerät zur Ausführung eines Rechnerverfahrens zur pixelweisen Erzeugung eines Anzeigebildes, das einen Objektelementensatz mit einem Pinselobjektelement (Figuren 1c, 1d, Figur 3f, 100-120-122) darstellt, welches eine Bezier-Form ist, die mit ihrem Führungszentrum auf einer Führungsbahn (100-102-104) entlangbewegt wird, die ein nicht-rationaler Bezier-Pfad in dem genannten Objektsatz ist, wobei das Verfahren folgende Schritte umfaßt:

a. für jede Bahn-Bezier-Kurve einen bahnbezogenen Satz von Bahnsteuerpunkten in einem zugehörigen koordinatenartig orientierten Bahnkurven-Begrenzungskasten (100, 106, 116, 118) liefern und für jede Pinsel-Bezier-Kurve einen pinselbezogenen Satz von Pinselsteuerpunkten in einem zugehörigen Pinselkurven-Begrenzungskasten (100, 120, 124, 122) liefern, und einen Pinsel-Begrenzungskasten mit allen Punkten der Pinselform liefern;

b. für jedes Pixel Anwendungs-Koordinatenwerte hinsichtlich jedes relevanten Objektelementes für einen tatsächlichen Punkt bestimmen, der mit diesem Pixel übereinstimmt, und anschließend erweitern jedes entsprechenden Bahnkurven-Begrenzungskastens mit dem Pinsel-Begrenzungskasten zu einem ausgeweiteten Kasten (100-110-114-118) und

c. in einem Bestimmungsverfahren für den genannten tatsächlichen Punkt bestimmen, entweder:

c1. tatsächlicher Punkt liegt außerhalb des ausgeweiteten Kastens (132), dann fragliche Bahnkurve zurückweisen und zu einer anderen Bahnkurve gehen, oder

c2. tatsächlicher Punkt liegt innerhalb des Pinsel-Begrenzungskasten (126-128), wenn das Pinsel-Führungszentrum in einem der Endpunkte der tatsächlichen Bahnkurve positioniert ist, dann Pinselprozedur mit Bezug auf einen solchen Endpunkt ausführen, aber

c.3 andernfalls (130) eine Teilungsprozedur für die betreffende Bahn-Bezier-Kurve ausführen und einen beliebigen Teil als sekundäre Bahn-Bezier-Kurve zur Verarbeitung in der genannten Bestimmungsprozedur nehmen;

d. in der Pinselprozedur für jede Pinsel-Bezier-Kurve für den genannten tatsächlichen Punkt bestimmen, entweder:

dl. tatsächlicher Punkt liegt außerhalb des Pinselkurven-Begrenzungskastens, dann zur Schnittpunkt-Prozedur gehen, oder

d2. tatsächlicher Punkt deckt sich mit einem Pinsel-Bezier-Kurven-Endpunkt, dann beenden und mit Zuordnungs-Operation fortfahren, oder

d3. alle Steuerpunkte der Pinsel-Bezier-Kurve liegen in einem diskreten 2x2-Punkt-Quadrat, dann zur Schnittpunkt-Prozedur gehen, aber

d4. andernfalls die Teilungsprozedur für die betreffende Pinsel-Bezier-Kurve ausführen und einen beliebigen Teil als sekundäre Pinsel-Bezier-Kurve zur Verarbeitung in der genannten Pinselprozedur nehmen;

e. in der genannten Schnittpunkt-Prozedur eine Anzahl von Schnittpunkten von einer bestimmten quasi-unendlichen Linie beginnend in dem genannten tatsächlichen Punkt mit einer tatsächlichen Pinsel-Bezier-Kurve bestimmen und die genannte Anzahl akkumulieren, bis alle Pinsel-Bezier-Kurven in der Pinsel-prozedur verarbeitet sind und dann im Falle eines ungeradzahligen Akkumulationsergebnisses zu der genannten Zuordnungs-Operation gehen, aber andernfalls zu der genannten Bestimmungsprozedur zurückkehren und dabei die Akkumulierung zurücksetzen;

f. in der genannten Zuordnungsprozedur dem betreffenden Pixel eine "Innerhalb"-Angabe zuweisen und Prozedur beenden;

g. aber andernfalls dem betreffenden Pixel eine "Außerhalb"-Angabe zuweisen und Prozedur beenden;

wobei das genannte Gerät folgendes umfaßt:

- erste Speichermittel zur wahlweisen Speicherung einer Folge von Bahnsteuerpunkt-Koordinaten und Kantenkoordinaten des genannten Pinsel-Begrenzungskastens (250);
- zweite Speichermittel zur Speicherung der Koordinaten des genannten tatsächlichen Punktes (154);
- erste Berechnungsmittel, die durch die genannten ersten und zweiten Speichermittel versorgt werden, um die relativen Koordinaten der genannten Bahnsteuerpunkte zu berechnen;
- erste Prüfmittel, die durch die genannten ersten Berechnungsmittel versorgt werden, um für alle Steuerpunkte einer Bezier-Kurve zu prüfen, ob sie in einem 2x2-Punkt-Quadrat liegen (260);
- zweite Berechnungsmittel, die durch die genannten ersten Speichermittel und zweiten Speichermittel versorgt werden, um die relativen Werte der Kanten des ausgeweiteten Kastens zu berechnen (266);
- zweite Prüfmittel, die durch die genannten zweiten Berechnungsmittel versorgt werden, um zu prüfen, ob der tatsächliche Punkt außerhalb des genannten ausgeweiteten Kastens liegt (272, 274);
- dritte Berechnungsmittel, die durch die genannten ersten Berechnungsmittel versorgt werden, um die Steuerpunkte einer geteilten Bahn-Bezier-Kurve zu berechnen und diese den genannten ersten und zweiten Prüfmitteln zur bedingten Rückkopplung an den eigenen Eingang zu liefern;
- wobei das Gerät außerdem ein Ausgangsmittel besitzt, das durch die genannten ersten Berechnungsmittel versorgt wird, um verarbeitete Steuerpunkte an ein Pinsel-Prozedur-Verarbeitungsmittel auszugeben.

**25.** Gerät nach Anspruch 24, wobei das genannte dritte Berechnungsmittel ein Gruppierungsmittel zur gleichzeitigen Berechnung von mindestens zwei Ausgangs-Steuerpunkten als Zwischenpunkt zwischen jeweiligen Paaren von Eingangs-Steuerpunkten ist.

26. Gerät nach Anspruch 24, wobei das genannte Gruppierungsmittel eine einzige Reihe von Addierern hat, die eine serielle Pipeline-Organisation und eine Vielzahl von parallelen Ausgängen aufweisen.

27. Gerät nach Anspruch 24, wobei das genannte Pinsel-Prozedur-Verarbeitungsmittel mindestens ein Bahn-Bezier-Kurven-Teilungsmittel gemeinsam mit dem genannten dritten Berechnungsmittel hat.

28. Gerät nach Anspruch 24, wobei ein drittes Speichermittel an einem Ausgang der genannten dritten Berechnungsmittel vorgesehen ist, um die Steuerpunkte von mindestens einer geteilten Bahn-Bezier-Kurve stapelweise für die spätere Verarbeitung in dem genannten dritten Berechnungsmittel zu speichern.

## Revendications

1. Procédé de calcul informatique pour générer par pixels une image affichée représentant un ensemble-objet d'éléments-objets, comprenant un élément-objet en forme de pinceau (Fig. 1c, 1d, Fig. 3f, 100-120-122) qui est une forme de Bézier à déplacer avec son centre de guidage le long d'une trajectoire de guidage (100-102-104) qui est un trajet de Bézier non rationnel compris dans ledit ensemble-objet, ledit procédé comprenant les étapes visant à :

    a. pour chaque courbe de Bézier de trajectoire, constituer un ensemble de trajectoire de points de contrôle de trajectoire dans un cadre de courbe de trajectoire associé orienté suivant les coordonnées (100, 106, 116, 118), et pour chaque courbe de Bézier de pinceau, constituer un ensemble de pinceau de points de contrôle de pinceau dans un cadre de courbe de pinceau associé (100, 120, 124, 122) et constituer un cadre de pinceau contenant tous les points de la forme du pinceau;
    b. pour chaque pixel, déterminer les valeurs de coordonnées de l'application en ce qui concerne tout élément-objet intéressant pour un point réel correspondant à ce pixel, puis agrandir chaque cadre de courbe de trajectoire respectif avec le cadre de pinceau en un cadre agrandi (100-110-114-118), et
    c. déterminer au cours d'une procédure de détermination pour ledit point réel soit :

        c1. point réel à l'extérieur du cadre agrandi (132), alors rejet de la courbe de trajectoire en question et passage à une autre courbe, soit
        c2. point réel à l'intérieur du cadre de pinceau (126-128) lorsque le centre de guidage du pinceau est positionné dans l'un ou l'autre des points terminaux de la courbe de trajectoire réelle, puis exécution de la procédure de pinceau par rapport à ce point terminal, mais,
        c3. sinon (130), exécution d'une procédure de division sur la courbe de Bézier de trajectoire en question et prise d'une partie quelconque comme courbe de Bézier de trajectoire secondaire, en vue du traitement dans ladite procédure de détermination;

    d. déterminer au cours de la procédure de pinceau pour toute courbe de Bézier de pinceau, pour ledit point réel, soit :

        d1. point réel à l'extérieur du cadre de courbe de Bézier de pinceau, alors passage à une procédure d'intersection, soit
        d2. point réel qui coïncide avec tout point terminal de la courbe de Bézier de pinceau, alors sortie vers une procédure d'affectation, soit
        d3. tous les points de contrôle de la courbe de Bézier de pinceau se trouvent dans un carré de 2x2 points discrets, alors passage à la procédure d'intersection, mais
        d4. sinon, exécution de la procédure de division sur la courbe de Bézier de pinceau en question et prise de toute partie comme une courbe de Bézier de pinceau secondaire en vue du traitement dans ladite procédure de pinceau;

    e. déterminer au cours de ladite procédure d'intersection un nombre d'intersections d'une ligne semi-infinie particulière partant dans ledit point réel avec une courbe de Bézier de pinceau réelle et accumuler ledit nombre, jusqu'à ce que toutes les courbes de Bézier de pinceau aient été traitées au cours de la procédure de pinceau, puis, en cas de somme impaire, passer à ladite opération d'affectation mais sinon, revenir à ladite procédure de détermination tout en remettant la somme à zéro;

f. affecter au cours de ladite procédure d'affectation une indication -intérieur- au pixel en question et sortir;

g. mais sinon, affecter une indication -extérieur- au pixel en question et sortir.

2. Procédé suivant la revendication 1, dans lequel au cours de ladite procédure de détermination conjointement avec les étapes c1, c2, on vérifie si tous les points de contrôle de la courbe de Bézier de trajectoire réelle se trouvent dans un carré de 2x2 points discrets puis on passe à ladite procédure de pinceau, le pinceau étant positionné dans un point terminal ou l'autre de la courbe de Bézier de trajectoire réelle.

3. Procédé suivant la revendication 1, dans lequel ladite ligne semi-infinie a une première direction de coordonnées, et conjointement avec les étapes c1, c2, on vérifie si une ligne droite passant par le point réel et perpendiculaire à ladite première direction de coordonnées traverserait toujours la forme de pinceau lorsqu'elle est positionnée avec son centre de guidage sur un point de contrôle quelconque de la courbe de trajectoire réelle et, dans le cas positif, on passe à la procédure d'affectation.

4. Procédé suivant la revendication 1, dans lequel au point c2, la procédure de pinceau fait l'objet d'un accès lorsque le point réel se trouve dans un cadre de pinceau lorsque le cadre de pinceau coïncide avec un coin quelconque du cadre agrandi et, au cours de la procédure de pinceau, on vérifie si le point réel se trouve à l'extérieur du pinceau, mais dans une zone cohérente qui est contiguë à un coin du cadre agrandi, et dans le cas positif, on passe à une autre courbe de trajectoire.

5. Procédé suivant la revendication 1, dans lequel, conjointement avec l'étape c1, ledit résultat extérieur disqualifie la courbe de trajectoire en question pour une considération en rapport avec un point réel quelconque sur une ligne infinie coïncidant avec ladite ligne semi-infinie, à condition que la ligne infinie ne traverse pas le cadre agrandi.

6. Procédé suivant la revendication 5, dans lequel la dimension perpendiculaire à ladite ligne infinie dudit cadre agrandi est combinée dans une porte NON-OU dans au moins un sous-ensemble des courbes de trajectoire afin de produire une non-coïncidence à l'égard d'un ensemble de lignes contiguës parallèles de points comprenant ladite ligne infinie, et toute courbe de trajectoire dans ce sous-ensemble est disqualifiée pour une considération en rapport avec tout point réel sur toute ligne dudit ensemble.

7. Procédé suivant l'une quelconque des revendications 1 à 6, dans lequel ladite trajectoire de guidage est une forme fermée et définit également ladite indication -intérieur-, dans lequel ladite procédure de pinceau est également exécutée sur la trajectoire isolée, qui opère ensuite comme un deuxième pinceau fixe.

8. Procédé suivant la revendication 7, dans lequel une indication -intérieur-générée à l'égard de ladite trajectoire l'emporte sur toute indication -extérieur- résultant du traitement de la forme de pinceau.

9. Procédé suivant l'une quelconque des revendications 1 à 8, dans lequel toute indication -intérieur- produite pour un pixel réel met fin au traitement de ce pixel.

10. Procédé suivant l'une quelconque des revendications 1 à 9, dans lequel ladite forme de pinceau a une dimension qui est variable dans les coordonnées de l'application afin de maintenir sa dimension fixée dans les coordonnées du dispositif d'affichage au cours de toute opération de zoom avant/zoom arrière.

11. Procédé suivant l'une quelconque des revendications 1 à 10, dans lequel ladite trajectoire de guidage définit un caractère alphanumérique.

12. Procédé suivant l'une quelconque des revendications 1 à 11, dans lequel ladite trajectoire de guidage relie deux figures fermées.

13. Procédé suivant l'une quelconque des revendications 1 à 12, pour déterminer une cohérence spatiale d'une fenêtre d'affichage à l'égard d'une région qui est délimitée par un deuxième trajet de Bézier fermé, à afficher, dans lequel ledit deuxième trajet sert de trajectoire de guidage et ladite fenêtre est inversée dans l'espace à l'égard d'un point d'origine, ladite origine servant alors de centre de guidage, et un résultat de ladite inversion servant de pinceau, après quoi toute indication -intérieur- pour ledit point d'origine signale une non-cohérence.

14. Procédé suivant l'une quelconque des revendications 1 à 13, propre à être utilisé sur un appareil d'affichage en couleurs.

**15.** Procédé suivant l'une quelconque des revendications 1 à 14, propre à être utilisé sur un dispositif de traitement de texte.

**16.** Procédé suivant l'une quelconque des revendications 1 à 15, propre à être utilisé sur un système de traitement graphique.

**17.** Procédé suivant l'une quelconque des revendications 1 à 16, dans lequel ladite forme de pinceau contient une courbe de Bézier rationnelle qui, au moyen d'une projection conique à l'égard d'une deuxième origine, est transférée dans une courbe de Bézier non rationnelle en trois dimensions, qui, au moyen d'une projection cylindrique parallèle à la ligne de jonction entre la deuxième origine et le point réel, est transférée vers une autre forme de Bézier non rationnelle pour laquelle le confinement de point résultant de la deuxième origine est identique au confinement de point du point d'origine en question par rapport à la forme de pinceau originale.

**18.** Procédé suivant la revendication 17, dans lequel la forme de pinceau contient au moins une section conique.

**19.** Procédé suivant la revendication 18, dans lequel ladite forme de pinceau consiste exclusivement en des parties de section conique.

**20.** Procédé suivant la revendication 19, dans lequel cette forme de pinceau est une section conique unique.

**21.** Procédé suivant la revendication 20, dans lequel ladite forme de pinceau est un cercle.

**22.** Procédé suivant la revendication 20, dans lequel ladite forme de pinceau est une ellipse.

**23.** Procédé suivant l'une quelconque des revendications 1 à 16, dans lequel ladite forme de pinceau est un rectangle.

**24.** Appareil destiné à exécuter un procédé de calcul informatique pour générer par pixels une image affichée représentant un ensemble-objet en forme de d'éléments-objets, comprenant un élément-objet pinceau (Fig. 1c, 1d, Fig. 3f, 100-120-122) qui est une forme de Bézier à déplacer avec son centre de guidage le long d'une trajectoire de guidage (100-102-104) qui est un trajet de Bézier non rationnel compris dans ledit ensemble-objet, ledit procédé comprenant les étapes visant à :

a. pour chaque courbe de Bézier de trajectoire, constituer un ensemble de trajectoire de points de contrôle de trajectoire dans un cadre de courbe de trajectoire associé orienté suivant les coordonnées (100, 106, 116, 118), et pour chaque courbe de Bézier de pinceau, constituer un ensemble de pinceau de points de contrôle de pinceau dans un cadre de courbe de pinceau associé (100, 120, 124, 122) et constituer un cadre de pinceau contenant tous les points de la forme du pinceau;
b. pour chaque pixel, déterminer les valeurs de coordonnées de l'application en ce qui concerne tout élément-objet intéressant pour un point réel correspondant à ce pixel, puis agrandir chaque cadre de courbe de trajectoire respectif avec le cadre de pinceau en un cadre agrandi (100-110-114-118), et
c. déterminer au cours d'une procédure de détermination pour ledit point réel soit :

c1. point réel à l'extérieur du cadre agrandi (132), alors rejet de la courbe de trajectoire en question et passage à une autre courbe, soit
c2. point réel à l'intérieur du cadre de pinceau (126-128) lorsque le centre de guidage du pinceau est positionné dans l'un ou l'autre des points terminaux de la courbe de trajectoire réelle, puis exécution de la procédure de pinceau par rapport à ce point terminal, mais,
c3. sinon (130), exécution d'une procédure de division sur la courbe de Bézier de trajectoire en question et prise d'une partie quelconque comme courbe de Bézier de trajectoire secondaire, en vue du traitement dans ladite procédure de détermination;

d. déterminer au cours de la procédure de pinceau pour toute courbe de Bézier de pinceau pour ledit point réel, soit :

d1. point réel à l'extérieur du cadre de courbe de Bézier de pinceau, alors passage à une procédure d'intersection, soit
d2. point réel qui coïncide avec tout point terminal de la courbe de Bézier de pinceau, alors sortie vers une procédure d'affectation, soit

d3. tous les points de contrôle de la courbe de Bézier de pinceau se trouvent dans un carré de 2x2 points discrets, alors passage à la procédure d'intersection, mais

d4. sinon, exécution de la procédure de division sur la courbe de Bézier de pinceau en question et prise de toute partie comme une courbe de Bézier de pinceau secondaire en vue du traitement dans ladite procédure de pinceau;

e. déterminer au cours de ladite procédure d'intersection un nombre d'intersections d'une ligne semi-infinie particulière partant dans ledit point réel avec une courbe de Bézier de pinceau réelle et accumuler ledit nombre, jusqu'à ce que toutes les courbes de Bézier de pinceau aient été traitées au cours de la procédure de pinceau, puis en cas de somme impaire, passer à ladite opération d'affectation mais sinon, revenir à ladite procédure de détermination tout en remettant la somme à zéro;

f. affecter au cours de ladite procédure d'affectation une indication -intérieur- au pixel en question et sortir;

g. mais sinon, affecter une indication -extérieur- au pixel en question et sortir,

ledit appareil comprenant :

- un premier moyen de stockage pour stocker au choix une séquence de coordonnées de points de contrôle de trajectoire et de coordonnées de bord dudit cadre de pinceau (250);
- un deuxième moyen de stockage pour stocker les coordonnées dudit point réel (154);
- un premier moyen de calcul alimenté par lesdits premier et deuxième moyens de stockage pour calculer les coordonnées relatives desdits points de contrôle de trajectoire;
- un premier moyen de test alimenté par ledit premier moyen de calcul pour vérifier si tous les points de contrôle d'une courbe de Bézier se trouvent dans un carré de 2x2 points (260);
- un deuxième moyen de calcul alimenté par lesdits premier moyen de stockage et deuxième moyen de stockage pour calculer les valeurs relatives des bords du cadre agrandi (266);
- un deuxième moyen de test alimenté par ledit deuxième moyen de calcul pour vérifier si le point réel se trouve à l'extérieur dudit cadre agrandi (272, 274);
- un troisième moyen de calcul alimenté par ledit premier moyen de calcul pour calculer les points de contrôle d'une courbe de Bézier de trajectoire divisée et fournir ces derniers auxdits premier et deuxième moyens de test en vue d'un rétrocouplage conditionnel à sa propre entrée;
- ledit appareil comprenant en outre un moyen de sortie alimenté par ledit premier moyen de calcul pour délivrer les points de contrôle traités à un moyen de traitement de procédure de pinceau.

25. Appareil suivant la revendication 24, dans lequel ledit troisième moyen de calcul est un moyen matriciel destiné à calculer en simultanéité au moins deux points de contrôle de sortie comme points intermédiaires entre des paires respectives de points de contrôle d'entrée.

26. Appareil suivant la revendication 24, dans lequel ledit moyen matriciel comprend une seule colonne d'additionneurs qui a une organisation pipeline série et une pluralité de sorties parallèles.

27. Appareil suivant la revendication 24, dans lequel ledit moyen de traitement de la procédure de pinceau comprend au moins un moyen de division de courbe de Bézier de trajectoire en commun avec ledit troisième moyen de calcul.

28. Appareil suivant la revendication 24, dans lequel un troisième moyen de stockage est prévu à une sortie dudit troisième moyen de calcul pour stocker en pile les points de contrôle d'au moins une courbe de Bézier de trajectoire divisée, en vue du traitement ultérieur dans ledit troisième moyen de calcul.

FIG.1a

FIG.1b

FIG.1c

FIG.1d

FIG.2a

FIG.2b

22

EP 0 342 752 B1

FIG. 2c

FIG. 3a

**FIG. 3b**

**FIG. 3c**

**FIG. 3d**

**FIG. 3e**

**FIG. 3f**

FIG.4a

FIG.4b

FIG.4c

FIG. 5a

FIG. 5b

FIG. 5c

FIG. 6 a

FIG. 6 b

FIG. 6 c